# EUROPEAN PATENT SPECIFICATION

(11) **EP 3 320 729 B1**
(45) Date of publication and mention of the grant of the patent: **24.07.2019**
(21) Application number: 16730621.6
(22) Date of filing: 03.06.2016
(51) Int. Cl.: H04W 64/00, H04W 4/02, H04W 52/02

(54) **DETERMINING WIRELESS SCANNING RATE BASED ON PEDESTRIAN DEAD RECKONING RELIABILITY**
BESTIMMUNG DER DRAHTLOSABTASTRATE AUF BASIS DER FUSSGÄNGERKOPPELNAVIGATIONSZUVERLÄSSIGKEIT
DÉTERMINATION D'UNE FREQUENCE DE SCANNING SUR LA BASE DE LA FIABILITÉ D'ESTIMATION D'UNE LOCATION HISTORIQUE D'UN PIÉTON

(30) Priority: 09.07.2015 US 201514795715
(43) Date of publication of application: 16.05.2018
(73) Proprietor: Qualcomm Incorporated, San Diego, CA 92121-1714 (US)
(72) Inventor: NOORSHAMS, Nima, San Diego, California 92121-1714 (US); PAKZAD, Payam, San Diego, California 92121-1714 (US)
(74) Representative: Emde, Eric
(86) International application number: PCT/US2016/035866
(87) International publication number: WO 2017/007558

(56) References cited:
- US-A1- 2012 072 166
- US-A1- 2014 286 213
- NAGUIB AYMAN ET AL: "Scalable and accurate indoor positioning on mobile devices", INTERNATIONAL CONFERENCE ON INDOOR POSITIONING AND INDOOR NAVIGATION, IEEE, 28 October 2013 (2013-10-28), pages 1-10, XP032595726, DOI: 10.1109/IPIN.2013.6817856 [retrieved on 2014-05-16]
- RADU VALENTIN ET AL: "HiMLoc: Indoor smartphone localization via activity aware Pedestrian Dead Reckoning with selective crowdsourced WiFi fingerprinting", INTERNATIONAL CONFERENCE ON INDOOR POSITIONING AND INDOOR NAVIGATION, IEEE, 28 October 2013 (2013-10-28), pages 1-10, XP032595693, DOI: 10.1109/IPIN.2013.6817916 [retrieved on 2014-05-16]

## Description

### FIELD

The subject matter disclosed herein relates to electronic devices, and more particularly to methods, apparatuses, and systems for obtaining position fixes.

### BACKGROUNDS

Wireless Local Area Network (WLAN) and Bluetooth-based positioning techniques are well-understood and commonly used. These positioning techniques rely on trilateration of range measurements based on WLAN/Bluetooth signal measurements such as Received Signal Strength Indicator (RSSI), Round-Trip Time (RTT), etc. to determine the position of a receiver device. To obtain accurate and updated position estimates using the WLAN and/or Bluetooth-based positioning techniques requires frequent wireless (WLAN and/or Bluetooth) signal scanning (e.g., approximately once every 2 seconds). Frequent wireless signal scanning is relatively power-consuming and may become a concern in scenarios where battery power conservation is important. Other wireless signal-based positioning techniques include satellite-based positioning techniques, base station-based positioning techniques, and peer device-based positioning techniques. Scanning these wireless signals to obtain position fixes may also be power-consuming.

Attention is drawn to US 2014 286 213 A1 related to managing power consumption of a user equipment (UE) while providing location services. An aspect determines whether a given sensor configuration of a plurality of sensor configurations minimizes power consumption of the UE, wherein a sensor configuration comprises a set of values for a set of one or more sensor parameters controllable by the UE, and, based upon the determining, sets the set of one or more sensor parameters to the given sensor configuration. Further, US 2012 072 166 A1 relates to systems, methods, and an apparatus for performing deduced reckoning navigation without a constraint relationship between orientation of a sensor platform and a direction of travel of an object. A sensor fusion component can be configured to receive data from sensors of a sensor platform coupled to a pedestrian; and generate world coordinate information based on the data. Further, a gait recognition component can be configured to record one or more walking patterns of the pedestrian in a training database; and determine whether the world coordinate information is associated with a walking pattern of the one or more walking patterns. Furthermore, a position estimation component can be configured to estimate a position of the pedestrian based on the world coordinate information if the world coordinate information is associated with the walking pattern, regardless of an orientation of the sensor platform with respect to the position of the pedestrian.

### SUMMARY

In accordance with the present invention, a method as set forth in claim 1, an apparatus as set forth in claim 8 and a non-transitory, computer-readable, storage medium as set forth in claim 15 are provided. Further embodiments are inter alia disclosed in the dependent claims. Aspects of the disclosure are related to a method for adjusting a wireless signal scanning rate based on a pedestrian dead-reckoning (PDR) reliability level estimate includes estimating a PDR reliability level, determining a wireless signal scanning rate based at least in part on the estimated PDR reliability level, wherein wireless signal scanning is performed to obtain position fixes, and performing the wireless signal scanning at the determined wireless signal scanning rate.

### BRIEF DESCRIPTION OF THE DRAWINGS

FIG. 1 is a diagram illustrating an example environment in which embodiments of the disclosure may be practiced.
FIG. 2 is block diagram illustrating an example mobile device in which embodiments of the disclosure may be practiced.
FIG. 3 is a diagram illustrating example modules involved in position determination.
FIG. 4A is a flowchart illustrating an example method for adjusting a wireless signal scanning rate based on a PDR reliability level estimate.
FIG. 4B is a flowchart illustrating an example method for obtaining position fixes using one or more wireless signal-based positioning techniques.
FIGs. 5A-C are diagrams illustrating position fixes using various techniques and position ground truths.
FIG. 6 is a diagram illustrating effects of an unknown initial rotation on the results of PDR.
FIGs. 7A and 7B are illustrations of two example ellipses 700A and 700B representative of accelerometer readings.
FIGs. 8A and 8B are plots illustrating example PDR estimates for 5 steps.
FIG. 9 is a block diagram illustrating an example apparatus in which embodiments of the disclosure may be practiced.

### DETAILED DESCRIPTION

Aspects of the disclosure are disclosed in the following description and related drawings directed to specific embodiments of the disclosure. Alternate embodiments may be devised without departing from the scope of the disclosure. Additionally, well-known elements of the disclosure may not be described in detail or may be omitted so as not to obscure the relevant details of the disclosure.

The word "example" is used herein to mean "serving as an example, instance, or illustration." Any embodiment described herein as "example" is not necessarily to be construed as preferred or advantageous over other embodiments. Likewise, the term "embodiments" does not require that all embodiments include the discussed feature, advantage or mode of operation.

The terminology used herein is for the purpose of describing particular embodiments only and is not intended to limit embodiments of the disclosure. As used herein, the singular forms "a", "an" and "the" are intended to include the plural forms as well, unless the context clearly indicates otherwise. It will be further understood that the terms "comprises", "comprising", "includes" and/or "including", when used herein, specify the presence of stated features, integers, steps, operations, elements, and/or components, but do not preclude the presence or addition of one or more other features, integers, steps, operations, elements, components, and/or groups thereof.

Further, many embodiments are described in terms of sequences of actions to be performed by, for example, elements of a computing device (e.g., a server or device). It will be recognized that various actions described herein can be performed by specific circuits (e.g., application specific integrated circuits), by program instructions being executed by one or more processors, or by a combination of both. Additionally, these sequence of actions described herein can be considered to be embodied entirely within any form of computer readable storage medium having stored therein a corresponding set of computer instructions that upon execution would cause an associated processor to perform the functionality described herein. Thus, the various aspects of the disclosure may be embodied in a number of different forms, all of which have been contemplated to be within the scope of the claimed subject matter. In addition, for each of the embodiments described herein, the corresponding form of any such embodiments may be described herein as, for example, "logic configured to" perform the described action.

A positioning technique known as pedestrian dead reckoning (PDR) may be used to estimate a relative motion of a device. A common PDR module (either hardware or software) may include a pedometer (i.e., step counter) and a heading/direction estimator. The PDR leverages readings of low-power sensors of a device to obtain a relative motion of the device over a period of time. PDR may be different from other dead reckoning techniques in that PDR may provide a relative motion associated with each step. If an initial position fix at the beginning of the period of time is known, an updated position fix may be obtained by combining the initial position fix with the relative motion as estimated by PDR. The initial position fix may be obtained using a conventional wireless signal-based method, such as satellite-based positioning (e.g., Global Positioning System "GPS"), base station-based positioning, Bluetooth-based positioning, WLAN-based positioning, vision-based positioning, peer device-based positioning, or other positioning technologies.

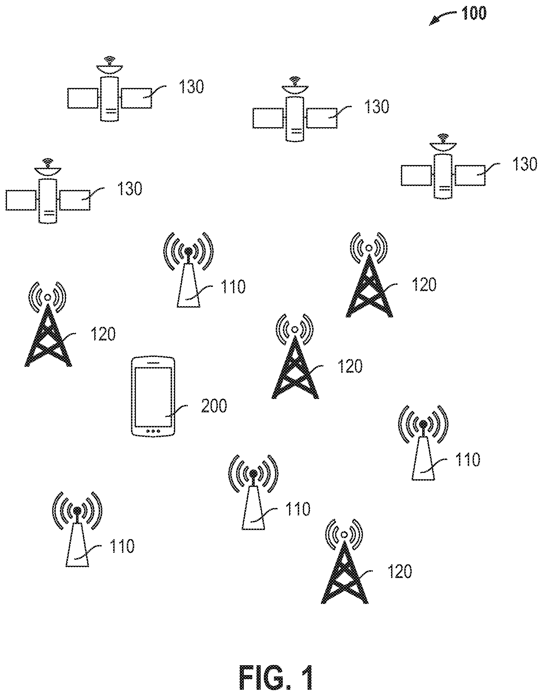

FIG. 1 is a diagram illustrating an example environment 100 in which embodiments of the disclosure may be practiced. A device 200 may receive wireless signals from a plurality of local location nodes (i.e., local transmitters) 110, a plurality of wireless wide area network (WWAN) base stations 120, a plurality of navigation satellites 130, or any combination thereof. Based on the signals received from the local location nodes 110, the WWAN base stations 120, the navigation satellites 130, or any combination thereof, the device 200 may obtain a position fix in the form of a set of coordinates in a local or global geographic coordination system. In one embodiment, the local location nodes 110 may be WLAN access points, Bluetooth location nodes, or any combination thereof. Local location nodes 110 may include local transmitters, such as WLAN transmitters, Bluetooth transmitters, or a combination thereof. The local transmitters may transmit a shorter distance than WWAN base stations, such as within a venue, etc. Methods are known to those skilled in the art for obtaining a position fix based on signals received from WLAN access points, Bluetooth location nodes, WWAN base stations, peer devices, and/or navigation satellites. As a non-limiting example, signal measurements such as Received Signal Strength Indicator (RSSI), Round-Trip Time (RTT), Time of Arrival (TOA), etc., may be utilized to determine the position of the device 200. It should be appreciated the numbers of local location nodes 110, WWAN base stations 120, and/or navigation satellites 130 do not limit the disclosure. In some embodiments, not all of the local location nodes 110, WWAN base stations 120, or navigation satellites 130 are present. For example, in one embodiment, only local location nodes 110 are present.

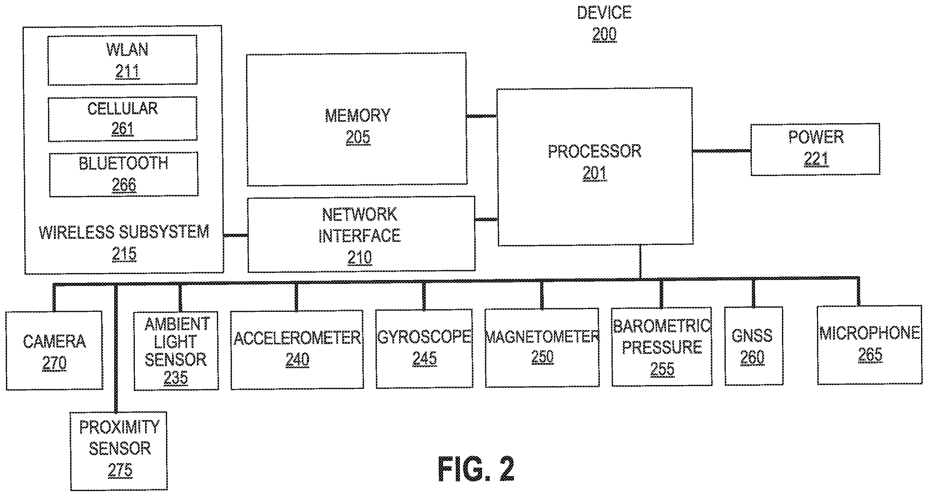

FIG. 2 is block diagram illustrating the example device 200 in which embodiments of the disclosure may be practiced. The device 200 in FIG. 2 and the device 200 in FIG. 1 may be the same device. The device 200 may include one or more processors 201, a memory 205, and network interface 210. Device 200 may also include a number of device sensors coupled to one or more buses or signal lines further coupled to the processor 201. It should be appreciated that device 200 may also include a display, a user interface (e.g., keyboard, touch-screen, or similar devices), a power device 221 (e.g., a battery), as well as other components typically associated with electronic devices. In some embodiments, device 200 may be a mobile or non-mobile device. Herein "processor" and "data processing unit" are used interchangeably.

The device 200 may include sensors such as ambient light sensor (ALS) 235, accelerometer 240, gyroscope 245, magnetometer 250, barometric pressure sensor 255, proximity sensor 275, and/or global navigation satellite system (GNSS) receiver 260. The GNSS receiver 260 may receive navigation satellite signals from one or more navigation satellite systems including but not limited to Global Positioning System (GPS), Galileo, GLONASS, or BeiDou, etc. In some embodiments, one or more cameras 270 are integrated or accessible to the device. For example, a mobile device may have at least a front and rear mounted camera. In some embodiments, other sensors may also have multiple installations or versions.

Memory 205 may be coupled to processor 201 to store instructions for execution by processor 201. In some embodiments, memory 205 is non-transitory. Memory 205 may also store one or more models or modules to implement embodiments described below. Memory 205 may also store data from integrated or external sensors.

Network interface 210 may also be coupled to a number of wireless subsystems 215 (e.g., Bluetooth 266, WLAN 211, Cellular 261, or other networks) to transmit and receive data streams through a wireless link to/from a wireless network, or may be a wired interface for direct connection to networks (e.g., the Internet, Ethernet, or other wired or wireless systems). The device 200 may include one or more local area network transceivers connected to one or more antennas. The local area network transceiver comprises suitable devices, hardware, and/or software for communicating with and/or detecting signals to/from wireless APs, and/or directly with other wireless devices within a network. In one aspect, the local area network transceiver may comprise a WLAN (802.11x) communication system suitable for communicating with one or more wireless access points.

The device 200 may also include one or more wide area network transceiver(s) that may be connected to one or more antennas. The wide area network transceiver comprises suitable devices, hardware, and/or software for communicating with and/or detecting signals to/from other wireless devices within a network. In one aspect, the wide area network transceiver may comprise a CDMA communication system suitable for communicating with a CDMA network of wireless base stations; however in other aspects, the wireless communication system may comprise another type of cellular telephony network or femtocells, such as, for example, TDMA, LTE, LTE Advanced, WCDMA, UMTS, 4G, or GSM. In addition, the wide area network transceiver(s) may also be coupled to peer devices directly rather than through a base station, femtocell, etc. For example, a device 200 may be coupled directly to another device through LTE Direct. Additionally, any other type of wireless networking technologies may be used, for example, WiMAX (802.16), Ultra Wide Band, ZigBee, wireless USB, etc.

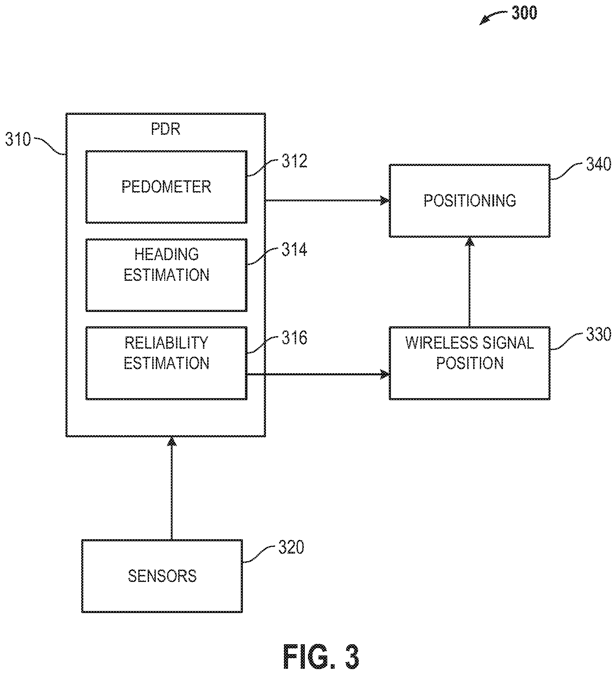

Referring to FIG. 3, a diagram 300 illustrating various modules deployed in the device 200 of FIG. 2 and involved in position determination is shown. A PDR module 310 for estimating relative motion comprises a pedometer module 312, a heading estimation module 314, and a reliability estimation module 316. The PDR module 310 may obtain readings from sensor 320, which may include accelerometer 240, gyroscope 245, magnetometer 250, barometer 255, microphone 265, ambient light sensor (ALS) 235, camera 270, or any combination thereof. Based on the sensor readings, the pedometer module 312 may provide a step count; the heading estimation module 314 may provide an estimate of the heading of the motion; and the reliability estimation module 316 may provide an estimated PDR reliability level. Based on the step count and the estimated heading, the PDR module may estimate a relative motion. The PDR reliability level indicates the reliability of the PDR estimates. In other words, the PDR reliability level is higher when the PDR estimates are more likely to be consistent with the ground truth, and the PDR reliability level is lower when the PDR estimates are less likely to be consistent with the ground truth. The PDR reliability may be affected by device stability, rotation of the device, motion of the device, etc. Various methods for determining the PDR reliability level are described hereinafter. The wireless signal position module 330 may use any suitable method described hereinafter to obtain position fixes based on wireless signals. The methods may include, but are not limited to WLAN-based positioning techniques, peer device-based positioning techniques, Bluetooth-based positioning techniques, cellular signals-based positioning techniques, navigation satellite-based positioning techniques, or any combination thereof. The rate at which the wireless signal position module 330 performs wireless signal scanning to try to obtain position fixes may be determined based on the PDR reliability level provided by the reliability estimation module 316. The results from the wireless signal position module 330 and the PDR module 310 may be combined in the positioning module 340 to obtain the current position of the device 200.

Each of the modules illustrated in FIG. 3 may be implemented as software executable by the processor 201 of the device 200, as dedicated hardware, or as a combination of software and dedicated hardware. When implemented as hardware, the modules may be connected to each other or to the processor 201, various sensors and/or memory 205 of the device 200 with suitable hardware connections (not shown).

Frequent scanning of the wireless signals by the device 200 may be required to maintain accurate position estimates without the use of such techniques as PDR. As described above, the wireless signals scanned may be WLAN signals, Bluetooth location signals, WWAN base station signals, peer device signals, navigation satellite signals, or any combination thereof. Scanning the wireless signals frequently to update position fixes may be power-consuming, and therefore may be undesirable in use scenarios where power conservation is a concern. With the assistance of PDR, the wireless signals may be scanned less frequently without significant loss in position estimate accuracy, especially when the PDR reliability level is high.

While PDR is generally less power-demanding than wireless signal-based positioning techniques and may provide more frequent position estimates (e.g., a new estimate at each step of a user carrying the device 200), PDR may be inaccurate and/or unreliable under certain circumstances, such as circumstances where the initial heading is unknown, or where the turn angles are biased, etc. Moreover, as PDR provides only estimates of relative motion, error in PDR-based position fixes may accumulate over time and/or drift.

Generally speaking, PDR performs accurately and reliably when the device 200 is steady in a user's hand or pocket, or is stationary. PDR performs less well when the device 200 is swung, rotated, when there are frequent changes in the device position, or when the device 200 is inside a loose pocket, etc. Therefore, the PDR reliability level may be estimated based on device stability, rotation of the device, motion of the device, or any combination thereof.

When PDR is performing less reliably, the results from wireless signal-based positioning techniques may help recalibrate PDR and improve the PDR reliability level by providing a position fix that corrects the heading and removes or reduces accumulated error in the PDR.

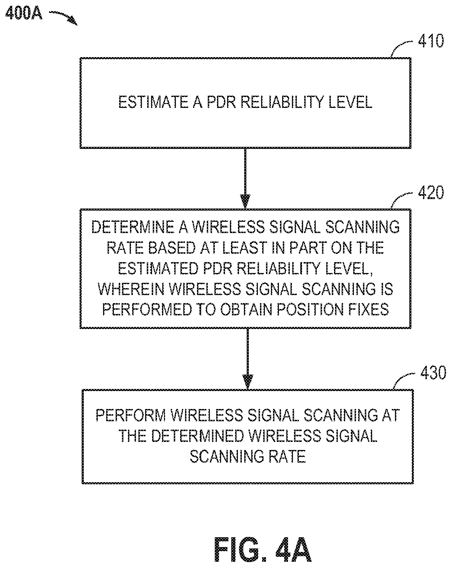

Embodiments of the disclosure intelligently adjusts the rate of wireless signal scanning that is performed to obtain new position fixes based on a PDR reliability level estimate. When the estimated PDR reliability is high, the wireless signal scanning may be performed less frequently to conserve power without sacrifice in the accuracy of updated position fixes. On the other hand, when the estimated PDR reliability is low, the wireless signal scanning may be performed more frequently to obtain accurate updated position fixes. Referring to FIG. 4A, a flowchart illustrating an example method 400A for adjusting a wireless signal scanning rate based on a PDR reliability level estimate is shown. At block 410, a PDR reliability level may be estimated. Any of the methods for estimating the PDR reliability level described hereinafter may be utilized. In some embodiments, the PDR reliability level may be estimated based at least in part on readings from at least one of an accelerometer, gyroscope, magnetometer, barometer, microphone, cellular modem, ambient light sensor (ALS), camera, or any combination thereof. For example, the PDR reliability level may be estimated based at least in part on device stability, heading estimate reliability, orientation of the device, local consistency of recent past PDR estimates, and/or gyroscope drift, etc., or any combination thereof. The PDR reliability level may also be estimated based at least in part on a determination of whether the user is holding the device close to the ear based on at least one of a microphone, cellular modem, ambient light sensor (ALS), camera, or any combination thereof. The method used for estimating the PDR reliability level does not limit the disclosure.

At block 420, a wireless signal scanning rate at which wireless signal scanning is performed to obtain position fixes may be determined based at least in part on the PDR reliability level estimated at block 410. The new wireless signal scanning rate may be higher than, lower than, or the same as a previous wireless signal scanning rate. For example, if the estimated PDR reliability level is high (e.g., above a first predetermined threshold), the wireless signal scanning rate may be decreased; on the other hand, if the estimated PDR reliability level is low (e.g., below a second predetermined threshold), the wireless signal scanning rate may be increased. In an alternative embodiment, a suitable wireless signal scanning rate may be directly determined based at least in part on the estimated PDR reliability level. Generally a higher PDR reliability level may result in a lower wireless signal scanning rate. The wireless signal scanning rate may be selected from a plurality of preset rates, or may be determined based on the PDR reliability level using a mathematical formula. In particular, the wireless signal scanning rate may be updated based on a comparison of the PDR reliability level to a predetermined threshold. For example, the wireless signal scanning rate may be increased when the PDR reliability level is below the threshold, and the wireless signal scanning rate may be decreased when the PDR reliability level is above the threshold.

At block 430, the wireless signal scanning may be performed at the rate determined at block 420 in order to obtain position fixes. Various known positioning techniques, such as WLAN-based techniques, Bluetooth-based techniques, WWAN base station signals-based techniques, peer device-based positioning techniques, or navigation satellite-based techniques, may be utilized to obtain the position fixes.

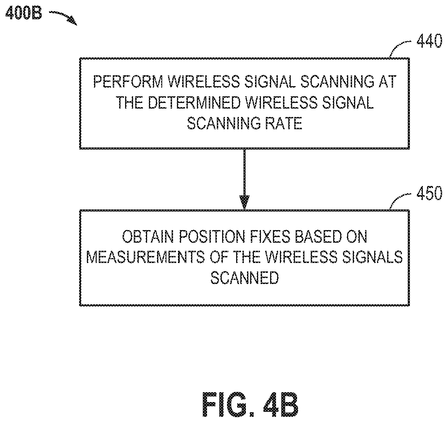

Referring to FIG. 4B, a flowchart illustrating an example method 400B for obtaining position fixes using one or more wireless signal-based positioning techniques is shown. At block 440, the wireless signals may be scanned at the rate determined at block 420. The scanned wireless signals may include WLAN signals, Bluetooth signals, WWAN base station signals, peer device signals, and/or navigation satellite signals, or any combination thereof. At block 450, position fixes may be obtained based on measurements made of the scanned wireless signals using techniques well-known in the art.

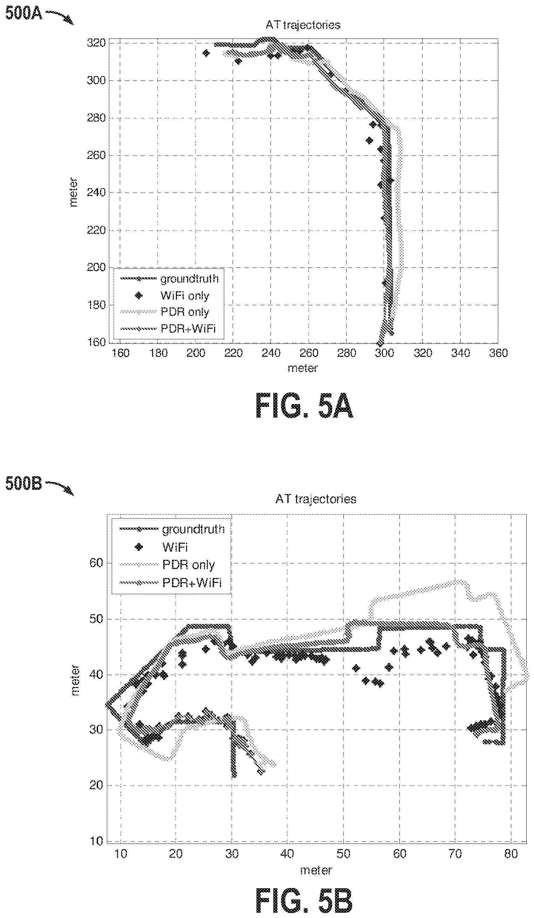

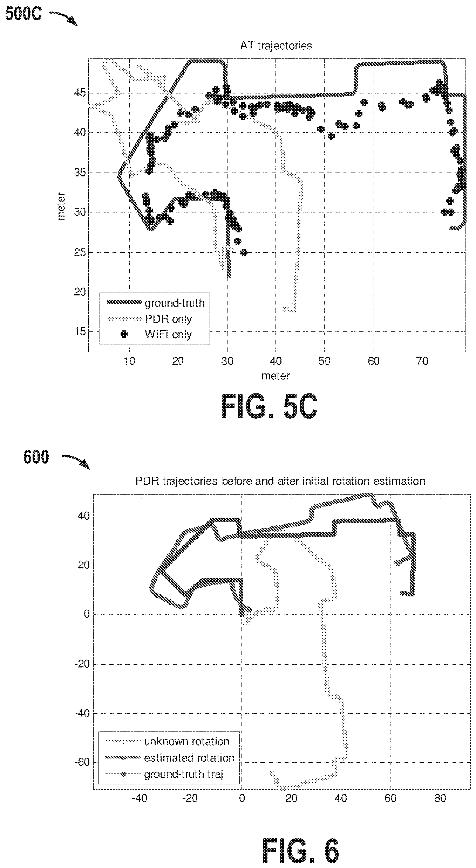

Referring to FIGs. 5A-C, diagrams 500A-C illustrating position fixes using various techniques and position ground truths in three different example scenarios are shown. FIGs. 5A and 5B include position ground truths as well as position fixes provided by 1) WLAN signal-based positioning techniques only, 2) PDR only with an initial position fix, and 3) combined PDR and WLAN signal-based techniques. FIG. 5C includes position ground truths and position fixes provided by 1) WLAN signal-based positioning techniques only, and 2) PDR only with an initial position fix. As can be seen, FIG. 5A illustrates a scenario where the mobile device is being moved while being held steady in a user's hand or in a user's pocket. In this scenario, PDR has performed accurately over a distance: the position fixes obtained by using only PDR track the ground truths with high accuracy. In this example, a very low WLAN signal scanning rate (e.g., a rate reduced by a factor of 10) for updated position fixes is sufficient thereby saving battery power.

FIG. 5B illustrates a scenario where the initial rotation of the mobile device is unknown. In this example, PDR is less accurate/reliable than in FIG. 5A due to the unknown initial rotation. Referring also to Fig. 6, a diagram 600 illustrating effects of an unknown initial rotation on the results of PDR is shown. As can be seen, without knowledge about the initial rotation of the device, the PDR results can be very inaccurate. Although the problem can be mitigated to some extent by an estimated initial rotation, the estimation error in the initial rotation is propagated through the position fixes obtained through PDR alone. Referring back to Fig. 5B, therefore, in this example, the WLAN signal scanning rate is higher compared to the use case illustrated in FIG. 5A, especially at the beginning, in order to estimate the rotation of the device based on WLAN measurements. With the assistance of WLAN measurements, the orientation of the device may be obtained and/or corrected, and the position fixes obtained by combining WLAN signal-based positioning and PDR track the ground truth with satisfactory accuracy. The WLAN signal scanning rate is also increased at the sharp turns in the direction of movement because PDR tends to be less accurate when there is a sudden change in the direction of movement.

FIG. 5C illustrates a scenario where there are constant changes in the alignment or rotation of the mobile device or where the device is being swung. In this example, the PDR results are very inaccurate. In this scenario, WLAN signal scanning needs to be performed at a much higher rate than in the two previous scenarios to keep the position fixes accurate, and PDR may even be disabled or its results discarded because PDR can only provide very low-quality results in this scenario. As can be seen in these scenarios, the combination of PDR and WLAN positioning typically improves the positioning results while also improving the device's battery life, and while in some situations, as illustrated in FIG. 5C, either the PDR or WLAN may be heavily relied on to compensate for weaker performance from the other, the improvement in positioning and battery life from the combination of PDR and WLAN greatly out weighs just using PDR only or WLAN only.

Various methods for estimating the PDR reliability level based on sensor readings have been contemplated. These methods use readings from common sensors in a device such as accelerometer 240, gyroscope 245, magnetometer 250, barometer 255, or microphone 265, etc. to calculate an estimated PDR reliability level. In some embodiments, some of the relevant sensors may each provide an estimated PDR reliability level, and the processor 201 and/or a separate dedicated hardware module may synthesize the estimated PDR reliability levels provided by the sensors to generate an overall estimated PDR reliability level. In other embodiments, the processor 201 and/or a separate dedicated hardware module may estimate the PDR reliability level directly based on sensor readings. A number of example methods for estimating the PDR reliability level are described hereinafter. These different methods may be used alone or in any possible combination. However, it should be appreciated that the method used to estimate the PDR reliability level does not limit the disclosure.

In one embodiment, to estimate the PDR reliability level, device stability (e.g., rate of change in the tilt/heading of the device 200) as estimated based on gyroscope 245 and accelerometer 240 readings may be relied on as being indicative of the PDR reliability level. For example, a low rate of change in the tilt/heading of the device 200 may indicate that the device 200 is stable and therefore the PDR reliability level is high, while a high rate of change in the tilt/heading of the device 200 may indicate that the device 200 is not stable and therefore the PDR reliability level is low.

In another embodiment, the PDR reliability level may be estimated based on an eigenvalue ratio of accelerometer 240 readings. When plotted on a Cartesian plane, the accelerometer readings over a period of time may approximate an ellipse. The ellipse is associated with two eigenvalues. The ratio between the two eigenvalues, or the eigenvalue ratio, is indicative of the ratio between the length of the major axis and the length of the minor axis of the ellipse. The direction of the major axis of the ellipse may be used as a proxy of the heading of the movement of the device 200. If the shape of the ellipse is close to that of a circle, the heading estimate is generally less reliable. On the other hand, if the ellipse is elongated, the heading estimate is generally more reliable. Therefore, an eigenvalue ratio close to 1 may indicate that the shape of the ellipse is close to that of a circle, which in turn may indicate a poor heading estimate and thus a low PDR reliability level. Depending on whether the ratio of the larger eigenvalue to the smaller eigenvalue or the ratio of the smaller eigenvalue to the larger eigenvalue is used as the eigenvalue ratio, a very large eigenvalue ratio (the former case), or an eigenvalue ratio very close to 0 (the latter case) may indicate that the shape of the ellipse is elongated, which in turn may indicate a good heading estimate and thus a high PDR reliability level. Accordingly, the PDR reliability level may be estimated based on the eigenvalue ratio of accelerometer 240 readings.

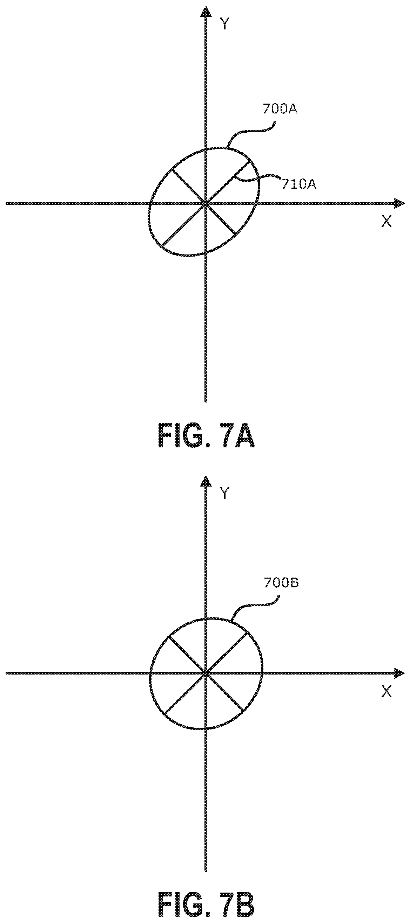

Referring to FIGs. 7A and 7B, illustrations of two example ellipses 700A and 700B representative of accelerometer readings are shown. Compared to the ellipse 700B, the ellipse 700A is more elongated and has either a larger eigenvalue ratio (if eigenvalue ratio is the ratio of the larger eigenvalue to the smaller eigenvalue) or an eigenvalue ratio closer to 0 (if eigenvalue ratio is the ratio of the smaller eigenvalue to the larger eigenvalue), and this may indicate a more reliable heading estimate based on the major axis 710A and thus a higher PDR reliability level. On the other hand, the ellipse 700B is closer to a circle and has an eigenvalue ratio closer to 1, and this may indicate a poor heading estimate and thus a lower PDR reliability level.

In yet another embodiment, the PDR reliability level may be estimated based on a local consistency of recent PDR estimates: volatility in estimates indicate uncertain convergence and may be indicative of a low PDR reliability level. For example, the consistency of the PDR estimates for the last few steps, such as 3 steps, 4 steps, 5 steps, 6 steps, or 7 steps, etc., may be calculated as the local consistency. The local consistency may be represented as, for example, a standard deviation. Therefore, a high local consistency of recent PDR estimates may indicate a high PDR reliability level, and vice versa.

In yet another embodiment, the eigenvalue analysis may be applied to gyroscope readings. After the orientation of the device is ascertained and translated into the north east down (NED) coordinate system, plots of x, y, and z coordinates of gyroscope readings may approximate a three-dimensional ellipsoid. The longest axis of the ellipsoid may indicate a dominant turning direction. Therefore, the three eigenvectors of the ellipsoid being close to each other may be an indication that the turning direction estimate has low accuracy.

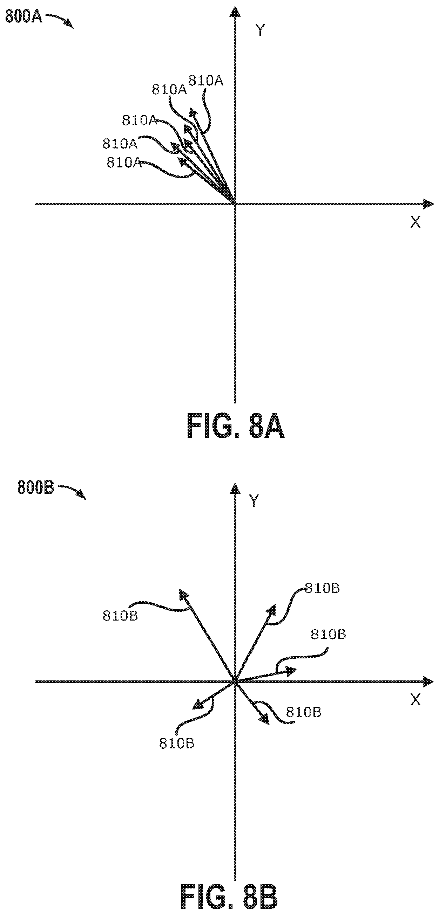

Referring to FIGs. 8A and 8B, two plots 800A and 800B illustrating example PDR estimates for the last 5 steps are shown. FIG. 8A shows PDR estimates 810A for the last 5 steps that are fairly close to each other (i.e., high consistency) and therefore may indicate a high PDR reliability level. On the other hand, FIG. 8B shows PDR estimates 810B for the last 5 steps that are vastly different from each other (i.e., low consistency) and therefore may indicate a low PDR reliability level.

In yet another embodiment, the PDR reliability level may be estimated based on the angle between gravity and a device axis. The gravity direction may be obtained from accelerometer 240 readings. A small angle between the gravity direction and a device axis may indicate that the device is in a stable position (e.g., in a shirt or backpack pocket), and thus may be indicative of a high PDR reliability level.

In yet another embodiment, the PDR reliability level may be estimated based on the rate of change of the angle between gravity and a device axis. The gravity direction may be determined using the accelerometer 240. A frequent change in the angle between the gravity direction and a device axis may indicate that the device is being swung (e.g., by a user) and thus may be indicative of a low PDR reliability level. On the other hand, a steady angle between the gravity direction and a device axis over a period of time may indicate that the device is inside a pocket or a bag and thus may be indicative of a high PDR reliability level.

In yet another embodiment, the PDR reliability level may be estimated based on the microphone 265 activity. For example, an active microphone 265 may indicate that the user is likely talking and holding the device 200 close to the ear, and thus may be indicative of a low PDR reliability level.

In yet another embodiment, the PDR reliability level may be estimated based on the cellular subsystem 261 activity (e.g., cellular modem activity). An active cellular subsystem 261 may indicate that the user is likely to be on a call and holding the device 200 close to the ear, which may indicate a low PDR reliability level.

In yet another embodiment, the PDR reliability level may be estimated based on ambient light sensor (ALS) 235 readings. The ALS is commonly used to determine whether a user is holding the device close to the ear as the head of the user may block the ambient light and prevent the ambient light from reaching the ALS. Thus, an ALS 235 reading that indicates a low ambient light level may indicate that the user is holding the device 200 close to the ear and talking on a call, which may indicate a low PDR reliability level.

In yet another embodiment, the PDR reliability level may be estimated based on the camera 270 activity. For example, if the front facing camera captures a dark image, while the back camera captures a clear image, it may be assumed that the user is likely holding the device 200 close to the ear, which may indicate a low PDR reliability level. As another example, if both the front facing camera and the back camera capture clear images, it may be assumed that the user likely has the device 200 out and may be using the device, which may indicate a low PDR reliability level. As a further example, if both the front facing camera and the back camera capture dark images, it may be assumed that the device 200 is likely in a pocket or a bag and is not in use, which may indicate a high PDR reliability level.

In yet another embodiment, the PDR reliability level may be estimated based on the rate of change in barometer 255 measurements. A rapid change in barometer 255 readings may indicate that the user is moving up the stairs or using an elevator, and thus may be indicative of a low PDR reliability level.

In yet another embodiment, the PDR reliability level may be estimated based on the gyroscope 245 drift over a long period of time. A consistent and persistent gyroscope 245 drift over a long period of time may indicate a sensor bias and thus may be indicative of a low PDR reliability level.

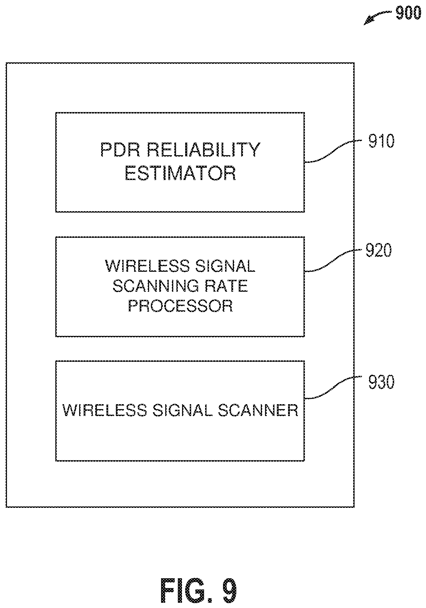

Referring to FIG. 9, a block diagram illustrating an example apparatus 900 in which embodiments of the disclosure may be practiced is shown. Within the apparatus 900, a PDR reliability estimator 910 may estimate a PDR reliability level; a wireless signal scanning rate processor 920 may determine a wireless signal scanning rate based at least in part on the estimated PDR reliability level; and a wireless signal scanner 930 may perform wireless signal scanning at the determined wireless signal scanning rate.

Therefore, embodiments of the disclosure are directed to intelligently adjusting the rate of wireless signal scanning that is performed to obtain new position fixes based on a PDR reliability level estimate. When the estimated PDR reliability is high, the wireless signal scanning may be performed less frequently to conserve power without sacrificing the accuracy of updated position fixes. On the other hand, when the estimated PDR reliability is low, the wireless signal scanning may be performed more frequently to obtain accurate updated position fixes and possibly recalibrate the PDR. Various methods for estimating the PDR reliability level have been described hereinafter.

It should be appreciated that aspects of the disclosure previously described may be implemented in conjunction with the execution of instructions (e.g., applications) by processor 201 of device 200, as previously described. Particularly, circuitry of the device, including but not limited to processor, may operate under the control of an application, program, routine, or the execution of instructions to execute methods or processes in accordance with embodiments of the disclosure (e.g., the processes of FIG. 4). For example, such a program may be implemented in firmware or software (e.g., stored in memory and/or other locations) and may be implemented by processors and/or other circuitry of the devices. Further, it should be appreciated that the terms processor, microprocessor, circuitry, controller, etc., refer to any type of logic or circuitry capable of executing logic, commands, instructions, software, firmware, functionality, etc.

Methods described herein may be implemented in conjunction with various wireless communication networks such as a wireless wide area network (WWAN), a wireless local area network (WLAN), a wireless personal area network (WPAN), and so on. The term "network" and "system" are often used interchangeably. A WWAN may be a Code Division Multiple Access (CDMA) network, a Time Division Multiple Access (TDMA) network, a Frequency Division Multiple Access (FDMA) network, an Orthogonal Frequency Division Multiple Access (OFDMA) network, a Single-Carrier Frequency Division Multiple Access (SC-FDMA) network, and so on. A CDMA network may implement one or more radio access technologies (RATs) such as cdma2000, Wideband-CDMA (W-CDMA), and so on. Cdma2000 includes IS-95, IS-2000, and IS-856 standards. A TDMA network may implement Global System for Mobile Communications (GSM), Digital Advanced Mobile Phone System (D-AMPS), or some other RAT. GSM and W-CDMA are described in documents from a consortium named "3rd Generation Partnership Project" (3GPP). Cdma2000 is described in documents from a consortium named "3rd Generation Partnership Project 2" (3GPP2). 3GPP and 3GPP2 documents are publicly available. A WLAN may be an IEEE 802.11x network, and a WPAN may be a Bluetooth network, an IEEE 802.15x, or some other type of network. The techniques may also be implemented in conjunction with any combination of WWAN, WLAN and/or WPAN.

Example methods, apparatuses, or articles of manufacture presented herein may be implemented, in whole or in part, for use in or with mobile communication devices. As used herein, "mobile device," "mobile communication device," "hand-held device," "tablets," etc., or the plural form of such terms may be used interchangeably and may refer to any kind of special purpose computing platform or device that may communicate through wireless transmission or receipt of information over suitable communications networks according to one or more communication protocols, and that may from time to time have a position or location that changes. As a way of illustration, special purpose mobile communication devices, may include, for example, cellular telephones, satellite telephones, smart telephones, heat map or radio map generation tools or devices, observed signal parameter generation tools or devices, personal digital assistants (PDAs), laptop computers, personal entertainment systems, e-book readers, tablet personal computers (PC), personal audio or video devices, personal navigation units, wearable devices, or the like. It should be appreciated, however, that these are merely illustrative examples relating to mobile devices that may be utilized to facilitate or support one or more processes or operations described herein.

The methodologies described herein may be implemented in different ways and with different configurations depending upon the particular application. For example, such methodologies may be implemented in hardware, firmware, and/or combinations thereof, along with software. In a hardware implementation, for example, a processing unit may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic devices, other devices units designed to perform the functions described herein, and/or combinations thereof.

The herein described storage media may comprise primary, secondary, and/or tertiary storage media. Primary storage media may include memory such as random access memory and/or read-only memory, for example. Secondary storage media may include mass storage such as a magnetic or solid state hard drive. Tertiary storage media may include removable storage media such as a magnetic or optical disk, a magnetic tape, a solid state storage device, etc. In certain implementations, the storage media or portions thereof may be operatively receptive of, or otherwise configurable to couple to, other components of a computing platform, such as a processor.

In at least some implementations, one or more portions of the herein described storage media may store signals representative of data and/or information as expressed by a particular state of the storage media. For example, an electronic signal representative of data and/or information may be "stored" in a portion of the storage media (e.g., memory) by affecting or changing the state of such portions of the storage media to represent data and/or information as binary information (e.g., ones and zeros). As such, in a particular implementation, such a change of state of the portion of the storage media to store a signal representative of data and/or information constitutes a transformation of storage media to a different state or thing.

In the preceding detailed description, numerous specific details have been set forth to provide a thorough understanding of claimed subject matter. However, it will be understood by those skilled in the art that claimed subject matter may be practiced without these specific details. In other instances, methods and apparatuses that would be known by one of ordinary skill have not been described in detail so as not to obscure claimed subject matter.

Some portions of the preceding detailed description have been presented in terms of algorithms or symbolic representations of operations on binary digital electronic signals stored within a memory of a specific apparatus or special purpose computing device or platform. In the context of this particular specification, the term specific apparatus or the like includes a general-purpose computer once it is programmed to perform particular functions pursuant to instructions from program software. Algorithmic descriptions or symbolic representations are examples of techniques used by those of ordinary skill in the signal processing or related arts to convey the substance of their work to others skilled in the art. An algorithm is here, and generally, is considered to be a self-consistent sequence of operations or similar signal processing leading to a desired result. In this context, operations or processing involve physical manipulation of physical quantities. Typically, although not necessarily, such quantities may take the form of electrical or magnetic signals capable of being stored, transferred, combined, compared or otherwise manipulated as electronic signals representing information. It has proven convenient at times, principally for reasons of common usage, to refer to such signals as bits, data, values, elements, symbols, characters, terms, numbers, numerals, information, or the like. It should be understood, however, that all of these or similar terms are to be associated with appropriate physical quantities and are merely convenient labels.

Unless specifically stated otherwise, as apparent from the following discussion, it is appreciated that throughout this specification discussions utilizing terms such as "processing," "computing," "calculating," "identifying", "determining", "establishing", "obtaining", and/or the like refer to actions or processes of a specific apparatus, such as a special purpose computer or a similar special purpose electronic computing device. In the context of this specification, therefore, a special purpose computer or a similar special purpose electronic computing device is capable of manipulating or transforming signals, typically represented as physical electronic or magnetic quantities within memories, registers, or other information storage devices, transmission devices, or display devices of the special purpose computer or similar special purpose electronic computing device. In the context of this particular patent application, the term "specific apparatus" may include a general-purpose computer once it is programmed to perform particular functions pursuant to instructions from program software.

Reference throughout this specification to "one example", "an example", "certain examples", or "example implementation" means that a particular feature, structure, or characteristic described in connection with the feature and/or example may be included in at least one feature and/or example of claimed subject matter. Thus, the appearances of the phrase "in one example", "an example", "in certain examples" or "in some implementations" or other like phrases in various places throughout this specification are not necessarily all referring to the same feature, example, and/or limitation. Furthermore, the particular features, structures, or characteristics may be combined in one or more examples and/or features.

While there has been illustrated and described what are presently considered to be example features, it will be understood by those skilled in the art that various other modifications may be made, without departing from claimed subject matter. Additionally, many modifications may be made to adapt a particular situation to the teachings of claimed subject matter without departing from the central concept described herein. Therefore, it is intended that claimed subject matter not be limited to the particular examples disclosed, but that such claimed subject matter may also include all aspects falling within the scope of appended claims.

## Claims

1. A method for adjusting a wireless signal scanning rate based on a pedestrian dead-reckoning, PDR, reliability level estimate, comprising:
estimating a PDR reliability level from sensor data provided by at least one sensor during PDR, wherein the PDR reliability level is estimated based at least in part on device stability, rotation of the device, motion of the device, or any combination thereof determined from the sensor data during PDR;
determining a wireless signal scanning rate based at least in part on the estimated PDR reliability level, wherein wireless signal scanning is performed at the wireless signal scanning rate to obtain position fixes used during PDR;
adjusting the wireless signal scanning rate from a first initial wireless signal scanning rate to the determined wireless signal scanning rate based on the estimated PDR reliability level during PDR; and
performing the wireless signal scanning at the determined wireless signal scanning rate.

2. The method of claim 1, wherein the wireless signal scanning rate is updated based on a comparison of the PDR reliability level to a first predetermined threshold.

3. The method of claim 1, wherein the PDR reliability level is estimated based at least in part on an accelerometer, gyroscope, magnetometer, barometer, microphone, cellular modem, ambient light sensor, ALS; camera, or any combination thereof.

4. The method of claim 1, wherein the PDR reliability level is estimated based at least in part on an eigenvalue ratio indicative of the ratio between the length of a major axis and the length of a minor axis of an ellipse formed by a plurality of accelerometer data when plotted on a Cartesian plane.

5. The method of claim 1, wherein the PDR reliability level is estimated based at least in part on one or more of the following: a local consistency of PDR estimates, an angle between gravity direction and a device axis of a device with which PDR is being performed, or on a rate of change in the angle, or any combination thereof, a gyroscope drift over a period of time and a rate of change in barometer measurements.

6. The method of claim 1, wherein the PDR reliability level is estimated based at least in part on whether a user is holding a device with which PDR is being performed, wherein whether the user is holding the device is preferably determined based on a microphone, cellular modem, ambient light sensor, ALS, camera, or any combination thereof.

7. The method of claim 1, wherein the scanned wireless signals comprises WLAN signals, personal area network signals, or any combination thereof.

8. An apparatus, comprising:
means for estimating a pedestrian dead-reckoning, in short PDR, reliability level from sensor data provided by at least one sensor during PDR, wherein the PDR reliability level is estimated based at least in part on device stability, rotation of the device, motion of the device, or any combination thereof determined from the sensor data during PDR;
means for determining a wireless signal scanning rate based at least in part on the estimated PDR reliability level, wherein wireless signal scanning is performed at the determined wireless signal scanning rate to obtain position fixes used during PDR;
means for performing wireless signal scanning at the determined wireless signal scanning rate by adjusting the wireless signal scanning rate from a first initial wireless signal scanning rate to the determined wireless signal scanning rate based on the estimated PDR reliability level during PDR..

9. The apparatus of claim 8, wherein the means for determining a wireless signal scanning rate are configured to update the wireless signal scanning rate based on a comparison of the PDR reliability level to a first predetermined threshold.

10. The apparatus of claim 8, wherein the means for estimating the PDR reliability level are configured to estimate the PDR reliability level based at least in part on data provided by an accelerometer, gyroscope, magnetometer, barometer, microphone, cellular modem, ambient light sensor, ALS, camera, or any combination thereof.

11. The apparatus of any one of claims 8 to 10, comprising:
a memory; and
a processor coupled to the memory, the processor configured to form the means for estimating the PDR reliability level, the means for determining the wireless signal scanning rate and the means for performing wireless signal scanning.

12. The apparatus of claim 11, wherein the processor is configured to estimate the PDR reliability level based at least in part on an eigenvalue ratio indicative of the ratio between the length of a major axis and the length of a minor axis of an ellipse formed by a plurality of accelerometer data when plotted on a Cartesian plane.

13. The apparatus of claim 11, wherein the processor is configured to estimate the PDR reliability level based at least in part on one or more of the following: a local consistency of PDR estimates, an angle between gravity direction and a device axis of a device with which PDR is being performed, or on a rate of change in the angle, or any combination thereof, a gyroscope drift over a period of time, and a rate of change in barometer measurements.

14. The apparatus of claim 11, wherein the processor is configured to estimate the PDR reliability level based at least in part on whether a user is holding a device with which PDR is being performed, wherein whether the user is holding the device is preferably determined based on at least one of a microphone, cellular modem, ambient light sensor, ALS, camera, or any combination thereof.

15. A non-transitory, computer-readable, storage medium storing computer executable code, which when executed by an apparatus causes the apparatus to carry out the method of any one of claims 1 to 7.

## Patentansprüche

1. Ein Verfahren zum Anpassen einer Drahtlossignalscan- bzw. -abtastrate basierend auf einer Schätzung eines Zuverlässigkeitsniveaus einer Fußgängerkoppelnavigation bzw. einer PDR-Zuverlässigkeitsniveauschätzung (PDR = pedestrian dead-reckoning), das Folgendes aufweist:
Schätzen eines PDR-Zuverlässigkeitsniveaus aus Sensordaten, die durch wenigstens einen Sensor während einer PDR vorgesehen werden, wobei das PDR-Zuverlässigkeitsniveau geschätzt wird basierend wenigstens teilweise auf einer Einrichtungsstabilität, einer Rotation der Einrichtung, einer Bewegung der Einrichtung oder irgendeiner Kombination davon, die aus den Sensordaten während der PDR bestimmt wird;
Bestimmen einer Drahtlossignalabtastrate basierend wenigstens teilweise auf dem geschätzten PDR-Zuverlässigkeitsniveau, wobei Drahtlossignalabtastung mit der Drahtlossignalabtastrate durchgeführt wird, um Positionsbestimmungen zu erlangen, die während der PDR verwendet werden;
Anpassen der Drahtlossignalabtastrate aus einer ersten anfänglichen Drahtlossignalabtastrate auf die bestimmte Drahtlossignalabtastrate basierend auf dem geschätzten PDR-Zuverlässigkeitsniveau während der PDR; und
Durchführen der Drahtlossignalabtastung mit der bestimmten Drahtlossignalabtastrate.

2. Verfahren nach Anspruch 1, wobei die Drahtlossignalabtastrate basierend auf einem Vergleich des PDR-Zuverlässigkeitsniveaus mit einem ersten vorbestimmten Schwellenwert aktualisiert wird.

3. Verfahren nach Anspruch 1, wobei das PDR-Zuverlässigkeitsniveau geschätzt wird basierend wenigstens teilweise auf einem Beschleunigungsmesser, einem Gyroskop, ein Magnetometer, einem Barometer, einem Mikrofon, einem Zell- bzw. Mobilfunkmodem, einem Umgebungslichtsensor bzw. ALS (ALS = ambient light sensor); einer Kamera oder irgendeiner Kombination davon.

4. Verfahren nach Anspruch 1, wobei das PDR-Zuverlässigkeitsniveau geschätzt wird basierend wenigstens teilweise auf einem Eigenwert-Verhältnis, das das Verhältnis zwischen der Länge einer Hauptachse und der Länge einer Nebenachse einer Ellipse anzeigt, die durch eine Vielzahl von Beschleunigungsmesserdaten gebildet wird, wenn sie auf einer kartesischen Fläche aufgetragen werden.

5. Verfahren nach Anspruch 1, wobei das PDR-Zuverlässigkeitsniveau geschätzt wird basierend wenigstens teilweise auf einem oder mehreren von Folgendem: einer lokalen Kontinuität von PDR-Schätzungen, einem Winkel zwischen der Gravitationsrichtung und einer Einrichtungsachse einer Einrichtung, mit der die PDR durchgeführt wird, oder auf einer Rate einer Änderung des Winkels, oder einer Kombination davon, einer Gyroskopdrift über eine Zeitperiode und einer Änderungsrate von Barometermessungen.

6. Verfahren nach Anspruch 1, wobei das PDR-Zuverlässigkeitsniveau geschätzt wird basierend wenigstens teilweise darauf, ob ein Nutzer eine Einrichtung, mit welcher die PDR durchgeführt wird, hält, wobei, ob der Nutzer die Einrichtung hält, vorzugsweise bestimmt wird basierend auf einem Mikrofon, einem Mobilfunkmodem, einem Umgebungslichtsensor bzw. ALS, einer Kamera oder irgendeiner Kombination davon.

7. Verfahren nach Anspruch 1, wobei die abgetasteten Drahtlossignale WLAN-Signale, Signale eines persönlichen Netzwerks bzw. PANs (PAN = personal area network) oder irgendeine Kombination davon aufweisen.

8. Eine Vorrichtung, die Folgendes auf:
Mittel zum Schätzen eines Zuverlässigkeitsniveaus einer Fußgängerkoppelnavigation bzw. eines PDR-Zuverlässigkeitsniveaus (PDR = pedestrian dead-reckoning) aus Sensordaten, die durch wenigstens einen Sensor während einer PDR vorgesehen werden, wobei das PDR-Zuverlässigkeitsniveau geschätzt wird basierend wenigstens teilweise auf einer Einrichtungsstabilität, einer Rotation der Einrichtung, einer Bewegung der Einrichtung oder irgendeiner Kombination davon, die aus den Sensordaten während der PDR bestimmt wird;
Mittel zum Bestimmen einer Drahtlossignalabtastrate basierend wenigstens teilweise auf dem geschätzten PDR-Zuverlässigkeitsniveau, wobei Drahtlossignalabtastung mit der bestimmten Drahtlossignalabtastrate durchgeführt wird, um Positionsbestimmungen zu erlangen, die während der PDR verwendet werden;
Mittel zum Durchführen von Drahtlossignalabtastung mit der bestimmten Drahtlossignalabtastrate durch Anpassen der Drahtlossignalabtastrate von einer ersten anfänglichen Drahtlossignalabtastrate auf die bestimmte Drahtlossignalabtastrate basierend auf dem geschätzten PDR-Zuverlässigkeitsniveau während der PDR.

9. Vorrichtung nach Anspruch 8, wobei die Mittel zum Bestimmen einer Drahtlossignalabtastrate konfiguriert sind zum Aktualisieren der Drahtlossignalabtastrate basierend auf einem Vergleich des PDR-Zuverlässigkeitsniveaus mit einem ersten vorbestimmten Schwellenwert.

10. Vorrichtung nach Anspruch 8, wobei die Mittel zum Schätzen des PDR-Zuverlässigkeitsniveaus konfiguriert sind zum Schätzen des PDR-Zuverlässigkeitsniveaus basierend wenigstens teilweise auf Daten, die durch einen Beschleunigungsmesser, ein Gyroskop, ein Magnetometer, ein Barometer, ein Mikrofon, ein Zell- bzw. Mobilfunkmodem, einen Umgebungslichtsensor bzw. ALS, eine Kamera oder eine Kombination davon vorgesehen werden.

11. Vorrichtung nach einem der Ansprüche 8 bis 10, die Folgendes aufweist:
einen Speicher; und
einen Prozessor, der an den Speicher gekoppelt ist, wobei der Prozessor konfiguriert ist zum Bilden der Mittel zum Schätzen des PDR-Zuverlässigkeitsniveaus, der Mittel zum Bestimmen der Drahtlossignalabtastrate und der Mittel zum Durchführen von Drahtlossignalabtastung.

12. Vorrichtung nach Anspruch 11, wobei der Prozessor konfiguriert ist zum Schätzen des PDR-Zuverlässigkeitsniveaus basierend wenigstens teilweise auf einem Eigenwert-Verhältnis, das das Verhältnis zwischen der Länge einer Hauptachse und der Länge einer Nebenachse einer Ellipse anzeigt, die gebildet wird durch eine Vielzahl von Beschleunigungsmesserdaten, wenn diese auf einer kartesischen Fläche aufgetragen werden.

13. Vorrichtung nach Anspruch 11, wobei der Prozessor konfiguriert ist zum Schätzen des PDR-Zuverlässigkeitsniveaus basierend wenigstens teilweise auf einem oder mehrerem von Folgendem: einer lokalen Kontinuität von PDR-Schätzungen, einem Winkel zwischen der Gravitationsrichtung und einer Einrichtungsachse einer Einrichtung, mit der die PDR durchgeführt wird, oder auf einer Rate einer Änderung des Winkels, oder einer Kombination davon, einer Gyroskopdrift über eine Zeitperiode und einer Änderungsrate von Barometermessungen.

14. Vorrichtung nach Anspruch 11, wobei der Prozessor konfiguriert ist zum Schätzen des PDR-Zuverlässigkeitsniveaus basierend wenigstens teilweise darauf, ob ein Nutzer eine Einrichtung, mit welcher die PDR durchgeführt wird, hält, wobei, ob der Nutzer die Einrichtung hält, vorzugsweise bestimmt wird basierend auf einem Mikrofon, einem Zell- bzw. Mobilfunkmodem, einem Umgebungslichtsensor bzw. ALS, einer Kamera oder irgendeiner Kombination davon.

15. Ein nicht transitorisches, computerlesbares Speichermedium, das von einem Computer ausführbaren Code speichert, der, wenn er durch eine Vorrichtung ausgeführt wird, die Vorrichtung veranlasst zum Durchführen des Verfahrens nach einem der Ansprüche 1 bis 7.

## Revendications

1. Procédé pour ajuster une vitesse de balayage d'un signal sans fil sur la base d'une estimation de niveau de fiabilité de navigation pédestre, PDR, comprenant les étapes suivantes :
l'estimation d'un niveau de fiabilité de PDR à partir de données de capteurs provenant d'au moins un capteur pendant la PDR, le niveau de fiabilité de PDR étant estimé sur la base au moins en partie d'une stabilité du dispositif, d'une rotation du dispositif, d'un déplacement du dispositif, ou d'une quelconque combinaison de ceux-ci déterminés à partir des données de capteur pendant la PDR ;
la détermination d'une vitesse de balayage d'un signal sans fil sur la base au moins en partie du niveau de fiabilité de PDR estimé, un balayage d'un signal sans fil étant effectué à la vitesse de balayage de vitesse sans fil pour obtenir des repères de position utilisés pendant la PDR ;
l'ajustement de la vitesse de balayage d'un signal sans fil à partir d'une première vitesse de balayage d'un signal sans fil initiale jusqu'à la vitesse de balayage d'un signal sans fil déterminée sur la base du niveau de fiabilité de PDR estimé pendant la PDR ; et
la mise en oeuvre du balayage d'un signal sans fil à la vitesse de balayage d'un signal sans fil déterminée.

2. Procédé selon la revendication 1, dans lequel la vitesse de balayage d'un signal sans fil est mise à jour sur la base d'une comparaison du niveau de fiabilité de PDR avec un premier seuil prédéterminé.

3. Procédé selon la revendication 1, dans lequel le niveau de fiabilité de PDR est estimé sur la base au moins en partie d'un accéléromètre, d'un gyroscope, d'un magnétomètre, d'un baromètre, d'un microphone, d'un modem cellulaire, d'un capteur de lumière ambiante, ALS, d'une caméra ou de toute combinaison de ceux-ci.

4. Procédé selon la revendication 1, dans lequel le niveau de fiabilité de PDR est estimé sur la base au moins en partie d'un rapport de valeurs propres indicatif du rapport entre la longueur d'un axe principal et la longueur d'un axe secondaire d'une ellipse formée par une pluralité de données d'accéléromètre tracées dans un plan cartésien.

5. Procédé selon la revendication 1, dans lequel le niveau de fiabilité de PDR est estimé sur la base au moins en partie d'un ou plusieurs parmi : une cohérence locale des estimations de la PDR, un angle entre la direction de la gravité et un axe du dispositif avec lequel la PDR est mise en oeuvre, ou sur une vitesse de variation de l'angle, ou une quelconque combinaison de ceux-ci, une dérive d'un gyroscope pendant une période de temps et un taux de variation de mesures d'un baromètre.

6. Procédé selon la revendication 1, dans lequel le niveau de fiabilité de PDR est estimé sur la base au moins en partie de si un utilisateur tient un dispositif avec lequel la PDR est mise en oeuvre, dans lequel savoir si l'utilisateur tient le dispositif est de préférence déterminé sur la base d'un microphone, d'un modem cellulaire, d'un capteur de lumière ambiante, ALS, d'une caméra ou d'une quelconque combinaison de ceux-ci.

7. Procédé selon la revendication 1, dans lequel les signaux sans fil balayés comprennent des signaux WLAN, des signaux de réseau personnel, ou une quelconque combinaison de ceux-ci.

8. Appareil comprenant :
des moyens pour estimer un niveau de fiabilité de navigation pédestre, PDR, à partir de données de capteurs provenant d'au moins un capteur pendant la PDR, le niveau de fiabilité de PDR étant estimé sur la base au moins en partie d'une stabilité du dispositif, d'une rotation du dispositif, d'un déplacement du dispositif, ou d'une quelconque combinaison de ceux-ci déterminés à partir des données de capteur pendant la PDR ;
des moyens pour déterminer une vitesse de balayage d'un signal sans fil sur la base au moins en partie du niveau de fiabilité de PDR estimé, dans lequel un balayage d'un signal sans fil est effectué à la vitesse de balayage de vitesse sans fil déterminée pour obtenir des repères de position utilisés pendant la PDR ; et
des moyens pour mettre en oeuvre un balayage d'un signal sans fil à la vitesse de balayage d'un signal sans fil déterminée en ajustant la vitesse de balayage d'un signal sans fil à partir d'une première vitesse de balayage d'un signal sans fil initiale jusqu'à la vitesse de balayage d'un signal sans fil déterminée sur la base du niveau de fiabilité de PDR estimé pendant la PDR.

9. Appareil selon la revendication 8, dans lequel les moyens pour déterminer une vitesse de balayage d'un signal sans fil sont configurés pour mettre à jour la vitesse de balayage d'un signal sans fil sur la base d'une comparaison du niveau de fiabilité de PDR avec un premier seuil prédéterminé.

10. Appareil selon la revendication 8, dans lequel les moyens pour estimer un niveau de fiabilité de PDR sont configurés pour estimer un niveau de fiabilité de PDR sur la base au moins en partie de données provenant d'un accéléromètre, d'un gyroscope, d'un magnétomètre, d'un baromètre, d'un microphone, d'un modem cellulaire, d'un capteur de lumière ambiante, ALS, d'une caméra ou de toute combinaison de ceux-ci.

11. Appareil selon l'une quelconque des revendications 8 à 10, comprenant :
une mémoire ; et
un processeur couplé à la mémoire, le processeur étant configuré pour constituer les moyens pour estimer le niveau de fiabilité de PDR, les moyens pour déterminer la vitesse de balayage d'un signal sans fil et les moyens pour effectuer un balayage d'un signal sans fil.

12. Appareil selon la revendication 11, dans lequel le processeur est configuré pour estimer le niveau de fiabilité de PDR sur la base au moins en partie d'un rapport de valeurs propres indicatif du rapport entre la longueur d'un axe principal et la longueur d'un axe secondaire d'une ellipse formée par une pluralité de données d'accéléromètre tracées dans un plan cartésien.

13. Appareil selon la revendication 11, dans lequel le processeur est configuré pour estimer le niveau de fiabilité de PDR sur la base au moins en partie sur un ou plusieurs parmi les suivants : une cohérence locale des estimations de PDR, un angle entre la direction de gravité et un axe du dispositif avec lequel la PDR est mise en oeuvre, ou une vitesse de variation de l'angle, ou une quelconque combinaison de ceux-ci, une dérive d'un gyroscope pendant une période de temps et un taux de variation de mesures d'un baromètre.

14. Appareil selon la revendication 11, dans lequel le processeur est configuré pour estimer le niveau de fiabilité de PDR sur la base au moins en partie de si un utilisateur tient un dispositif avec lequel la PDR est mise en oeuvre, dans lequel savoir si l'utilisateur tient le dispositif est de préférence déterminé sur la base d'un microphone, d'un modem cellulaire, d'un capteur de lumière ambiante, ALS, d'une caméra ou d'une quelconque combinaison de ceux-ci.

15. Support de stockage non transitoire lisible par ordinateur stockant un code exécutable par ordinateur qui, quand il est exécuté par un appareil, force l'appareil à mettre en oeuvre le procédé selon l'une quelconque des revendications 1 à 7.
